# EUROPEAN PATENT SPECIFICATION

(11) **EP 3 121 039 B1**
(45) Date of publication and mention of the grant of the patent: **06.03.2019**
(21) Application number: 15178320.6
(22) Date of filing: 24.07.2015
(51) Int. Cl.: B60H 1/00, F25B 45/00

(54) **METHOD FOR TRANSFERRING COOLANT FROM A LOADING UNIT TO AN AIR CONDITIONING SYSTEM**
VERFAHREN ZUR ÜBERTRAGUNG EINES KÜHLMITTELS AUS EINER LADEEINHEIT IN EINE KLIMAANLAGE
PROCÉDÉ PERMETTANT DE TRANSFÉRER LE LIQUIDE DE REFROIDISSEMENT PROVENANT D'UNE UNITÉ DE CHARGEMENT POUR UN SYSTÈME DE CONDITIONNEMENT D'AIR

(43) Date of publication of application: 25.01.2017
(73) Proprietor: Mahle Aftermarket Italy S.p.A., 43126 Parma (IT)
(72) Inventor: CANTADORI, Andrea, 43126 Parma (IT)
(74) Representative: Dondi, Silvia

(56) References cited:
- EP-A2- 2 363 669
- WO-A2-2010/032107
- CN-A- 103 143 539
- US-A1- 2003 196 450

## Description

### FIELD OF APPLICATION OF THE INVENTION

The present invention regards a method of maintenance of an air conditioning system and a connection device for the use of the latter. In particular, the present invention finds application in the automobile industry, for example in vehicle repair workshops.

### PRIOR ART

The air conditioning systems are subject to leakage of coolant fluid and require periodic reloading. Thus, there arises the need to actuate a cycle for reloading and/or regenerating the system; for this purpose, there were developed devices for the maintenance of air conditioning systems capable of executing the recovery, the recirculation and reloading of the coolant fluid in the system.

### TECHNICAL BACKGROUND

An air conditioning system is a closed system, which operates on pressure difference and change of state that the coolant gas is subjected to throughout the circuit. The components in question are:
- the compressor suctions and compresses the coolant, modifying its state and the temperature (from low pressure and low temperature to high pressure and high temperature); it has the function of compressing the coolant gas, making it pass from low temperature and low pressure to high temperature and high pressure. It is a precision component, whose quality has a major impact in terms of safety, comfort and energy saving. The compressor contains rotary parts, and thus should be suitably lubricated with a specific oil, with characteristics suitable for the refrigerating circuit;
- the condenser transfers heat to the external air and condenses the coolant, which thus passes from the gaseous state to the liquid state; in practice, it is a heat exchanger which serves to cool and thus liquefy the coolant gas coming from the compressor; it is mainly formed by ducts (primary exchange surface) and fins (secondary exchange surface). Usually, in vehicles it is positioned in the front part, before or beside the engine radiator. It transfers heat to the environment, given that its temperature is higher with respect to the one surrounding it. The air passes through the fin elements of the condenser and, by subtracting heat, it causes the liquefying of the refrigerating fluid or coolant;
- the coolant traverses the de-hydrating filter, which absorbs moisture and withholds impurities (the de-hydrating filter is placed between the condenser and the expansion valve and it is traversed by coolant in high pressure liquid state); the coolant then reaches the expansion valve, where it is subjected to a drastic pressure and temperature drop;
- in the evaporator, the coolant once again changes its state, passing from liquid to gaseous. It absorbs heat and lowers the temperature of the air introduced into the cabin through the aeration ducts; the evaporator is also a heat exchanger. It is conceptually identical to the condenser though having the opposite function. Inside, the coolant passes from the liquid state to the gaseous state absorbing heat from the environment. The air which traverses the fins thereof is cooled and enters into the cabin through the aeration ducts.

### GENERAL OPERATION

During the step of recovery and recirculation, the coolant fluid is taken from the air conditioning system through a rapid connection system connected to a recovery duct. Subsequently, the fluid is purified and accumulated in a deposit tank.

During the reloading step, a vacuum pump arranged downstream of the deposit tank creates a depression which moves the coolant fluid from the tank to the air conditioning system.

There can be provided for methods for measuring the mass associated to the tank, so as to monitor both the amount of re-circulated coolant fluid and the amount subsequently injected in the air conditioning system.

In any case, the coolant fluid is subsequently injected in the air conditioning system, generally passing through a quick connection interposed between the loading duct and the coupling on the vehicle side.

A method for transferring coolant fluid from a fluid tank of a loading unit/station to an air conditioning system is disclosed from EP 2 363 669 A2.

### DESCRIPTION AND ADVANTAGES OF THE INVENTION

An object of the present invention is to provide a method for transferring coolant fluid from a loading unit or station to an air conditioning system, providing for performing the transfer or loading of the coolant maintaining both high pressure and low pressure branches active, the latter usually dedicated to the recovery of coolant-vapour during emptying of the system.

Advantages:
- it guarantees the completion of the loading in any situation
- it eliminates the so-called heating bundle used for supporting the coolant tank, and the duration of the vacuum phase (during which the bundle is activated) is no longer significant
- it avoids having to utilize the overheating of the cylinder which facilitates the loading but slows the subsequent recovery,
- it offers performance comparable to a good liquid pump (1000 g/min averagely).

In addition, with a suitable choice of times and regulations of the reloading station, as well as the capacity (flow rate) of the station compressor, it is also possible to reload without performing vacuum phase, though minimum, and even reload the systems already partly loaded with coolant.

Said objects and advantages are attained by the method for transferring the coolant from a loading unit to an air conditioning system, subject of the present invention, which is characterized by what is provided for in the claims below.

### BRIEF DESCRIPTION OF THE DRAWINGS

This and other characteristics shall be more apparent from the following description of some embodiments illustrated, purely by way of non-limiting example, in the attached drawings.
- Figure 1: illustrates the operating principle of the method for loading the coolant from the station to the vehicle, of the known type,
- Figure 2: illustrates the operating principle of the method for loading coolant from the station to the vehicle, subject of the present invention.

### DESCRIPTION OF THE INVENTION

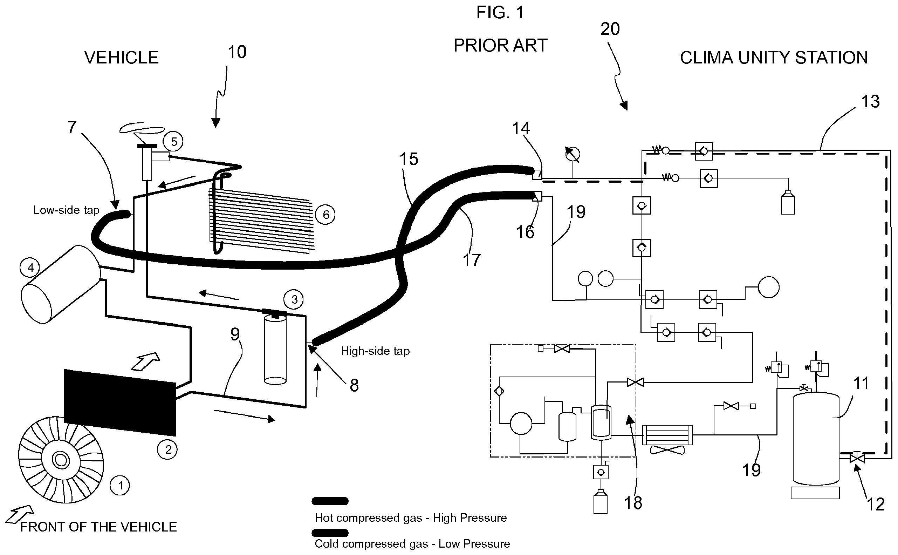

With particular reference to figure 1 there is indicated a method for transferring the coolant fluid, of the known type.

For example, reference is made to an automobile vehicle system.

Usually, the method can be actuated after the connection of the air conditioning system to be loaded, in the example indicated in its entirety with reference 10, with at least one unit 20 for the recovery and/or reload of coolant fluid, generally known as "air conditioning station".

The air conditioning system, which substantially performs a refrigerating cycle, is indicated with:
- a compressor 4;
- a condenser 2 and ventilation system 1;
- at least one de-hydrator filter 3,
- an expansion valve 5;
- an evaporator 6.

The components described above are connected by a closed circuit schematically illustrated by lines 9; there is also present a low pressure (LP) point of drawing 7 and a point of introduction 8 on the high pressure HP branch; the latter two allow the coupling with corresponding connection devices of an air conditioning station, as described hereinafter, with the aim of performing the maintenance, reload operations, etc....

The air conditioning station, 20, comprises therein:
- a coolant tank 11, or cylinder
- a cut off valve 12 for opening and closing at least one duct 13 for the exit of coolant fluid, said duct 13 reaches, through known suitable systems, a
- HP connection, i.e. at high pressure, indicated with 14 connectable in the relative high pressure HP branch 15 to the air conditioning system 10, so as to be connected with the high pressure liquid coolant, or fitting/valve 8;
- there is also present an LP connection, i.e. with low pressure, which can be identified with 16, and which can be connected through the relative branch 17 to the air conditioning system, in the fitting indicated with 7 generally arranged after the expansion valve 5; the coolant is in the gaseous state and with low pressure;
- A suctioning group 18 which, through special compressor means, draws/extracts the coolant from the air conditioning system of the vehicle, through the low pressure branch 17, and takes it into the tank 11, by means of ducts 19, so as to empty the system.

Thus, it is usually provided for drawing/recovering the coolant through the branch 17 connected to the low pressure valve, indicated with LP, and reloading, i.e. sending the new coolant, the system through the duct 15 of the valve HP.

In practice the method of maintenance of an air conditioning system, comprises the steps of:
- recovery of the coolant fluid present in the air conditioning system, on the LP valve side;
- filtering of the recovered coolant fluid;
- injection of coolant fluid in the air conditioning system, on the HP valve side;

By implementing the conventional loading method, i.e. from the air conditioning station to the vehicle, the coolant is transferred passing it from the tank to the system through the HP path, as indicated in figure 1.

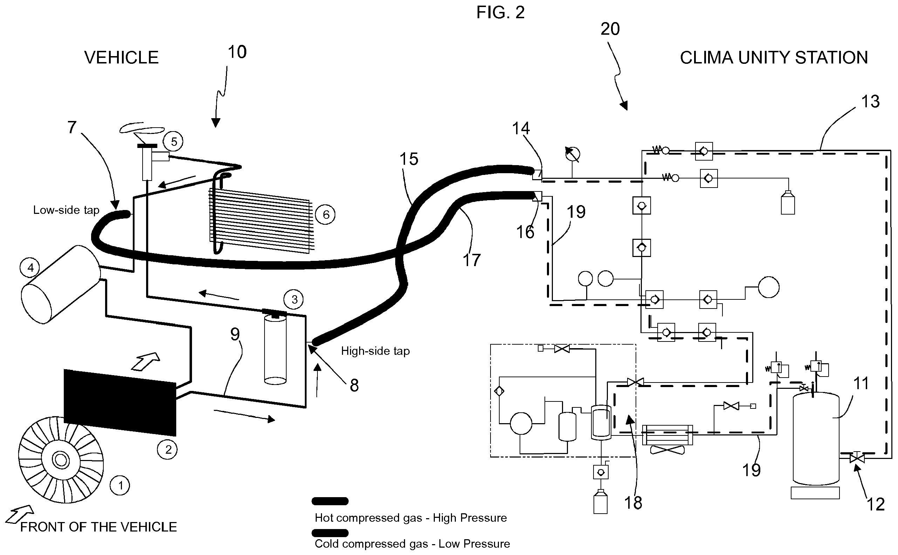

The method for transferring coolant from the unit 20 to the system 10, subject of the present invention, provides for transferring the fluid from the tank 11 through the duct 13, 15 entering in 8 in the system 10; in addition, it also provides for that the recovery circuit remains active, i.e. open, during said transfer, as illustrated in figure 2, identified by the drawing point 7, duct 17 and branch 19 thus allowing the passage of fluid in the circuit through the air conditioning station.

Thus, the low pressure LP circuit (vehicle side) has a lower pressure than that it would have with a conventional loading: the loaded coolant passes through the expansion valve 5 of the air conditioning system, for the expansion of the system but, given that the low pressure LP circuit is open, part of the loaded coolant is constantly suctioned (it is a vapour) by the station through the LP valve and line.

The compressor of the station, recovering the coolant from LP and pushing it into the cylinder, contributes to keeping loading pressure high.

As mentioned previously:
- vapour is recovered from the LP line
- liquid is loaded from the HP line

Thus, the net amount that enters into the system is always positive, i.e. there is more loaded coolant with respect to the suctioned coolant.

Below is a summary of the advantages that can be obtained with the described and claimed loading method:
- The loading occurs at speeds comparable with those that can be obtained with a loading gear pump,
- The loading is always completed automatically, even when the station is used for loading a system with brief vacuum phase,
- The recovery from the branch of the low pressure LP valve cools the system, thus further facilitating the loading.

Another characteristic of the claimed method is that with a suitable choice of the times and adjustment of the loading station, as well as the capacity (flow rate) of the compressor of the station, it loads without performing any vacuum phase, though minimum, and reloads systems already partly full of coolant.
The method for transferring coolant fluid from a thank (11) of a loading unit/station (20) to an air conditioning system (10), said air conditioning station (20) comprising:
a. a coolant tank 11,
b. a cut off valve 12 for opening and closing at least one duct 13 for the exit of coolant fluid,
c. an HP high pressure connection (14) connectable in the relative high pressure HP branch (15) to the air conditioning system (10), so as to be connected with the high pressure liquid coolant, or fitting/valve (8);
d. an LP low pressure connection (16) and which can be connected through the relative branch (17) to the air conditioning system (10), by means of a fitting/valve (7), arranged after the expansion valve (5) of the air conditioning system (10);
e. a suctioning group (18) which, through compressor means, draws/extracts the coolant from the air conditioning system (10), through the low pressure branch (17), and takes it into the tank (11), by means of ducts (19), so as to empty the system;
the method characterised in that for executing the step of transferring the fluid also maintaining the low pressure circuit branch (17) open/active, through relative low pressure LP valve; the activation/opening of the low pressure LP branch which connects the air conditioning station to the LP valve of the air conditioning system, occurs at least partly simultaneously with the activation/opening of the high pressure HP branch which connects the air conditioning station to the HP valve of the air conditioning system; the coolant loaded during said transfer step passes through the valve (5) for the expansion of the system and it is suctioned, as vapour, by the station through LP so that the net amount that enters into the system is always positive and there is more loaded coolant with respect to the suctioned coolant.

Typically the internal volume range of an air conditioning system 10 of a vehicle is around 1,5 and 2 litres, and requires 400-900 grams of coolant. The expansion valve 5 generates on the LP low pressure branch a pressure of 2-3 bar. For providing the claimed method the compressor of the suctioning group 18 must generates a flow of 25-60 litres per minute.

## Claims

1. Method for transferring coolant fluid from a thank (11) of a loading unit/station (20) to an air conditioning system (10), said air conditioning station (20) comprising:
a. a coolant tank (11),
b. a cut off valve (12) for opening and closing at least one duct (13) for the exit of coolant fluid,
c. an HP high pressure connection (14) connectable in the relative high pressure HP branch (15) to the air conditioning system (10), so as to be connected with the high pressure liquid coolant, or fitting/valve (8);
d. an LP low pressure connection (16) and which can be connected through the relative branch (17) to the air conditioning system (10), by means of a fitting/valve (7), arranged after the expansion valve (5) of the air conditioning system (10);
e. a suctioning group (18) which, through compressor means, draws/extracts the coolant from the air conditioning system (10), through the low pressure branch (17), and takes it into the tank (11), by means of ducts (19), so as to empty the system;
the method **characterised in that** for executing the step of transferring the fluid also maintaining the low pressure circuit branch (17) open/active, through relative low pressure LP valve; the activation/opening of the low pressure LP branch which connects the air conditioning station to the LP valve of the air conditioning system, occurs at least partly simultaneously with the activation/opening of the high pressure HP branch which connects the air conditioning station to the HP valve of the air conditioning system; the coolant loaded during said transfer step passes through the valve (5) for the expansion of the system and it is suctioned, as vapour, by the station through LP so that the net amount that enters into the system is always positive and there is more loaded coolant with respect to the suctioned coolant.

2. Method according to claim 1, wherein the expansion valve (5) generates on the LP low pressure branch a pressure of 2-3 bar.

3. Method according to claim 1, **characterised in that** the amount of coolant suctioned through LP is recovered and re-introduced in the tank, contributing to keeping loading pressure high.

## Patentansprüche

1. Verfahren zur Übertragung einer Kühlflüssigkeit von einem Tank (11) einer Ladeeinheit/Station (20) zu einer Klimaanlage (10), wobei die Luftaufbereitungsstation(20) umfasst:
a. einen Kühlmitteltank (11),
b. ein Absperrventil (12) zum Öffnen und Schließen mindestens eines Kanals (13) zum Austritt der Kühlflüssigkeit,
c. einen HP-Hochdruckverbindung (14), die in den jeweiligen Hochdruck-HP-Zweig (15) mit der Klimaanlage (10) verbindbar ist, um mit dem flüssigen HochdruckKühlmittel oder Anschluß/Ventil (8) verbunden zu werden;
d. eine LP-Niederdruckverbindung (16), die über einen jeweiligen Zweig (17) mit der Klimaanlage (10) mittels eines Anschlußes/Ventils (7) verbunden werden kann, die nach dem Expansionsventil (5) der Klimaanlage (10) angeordnet ist;
e. eine Ansauggruppe (18), die über Kompressormittel das Kühlmittel durch den Niederdruckzweig (17) aus der Klimaanlage (10) ansaugt/entzieht und es mittels Kanäle (19) in den Tank (11) bringt, um die Anlage zu entleeren;
wobei das Verfahren **dadurch gekennzeichnet ist, dass** zum Ausführen des Schritts zum Übertragen der Flüssigkeit auch der Niederdruckkreiszweig (17) offen/aktiv durch jeweiliges Niederdruck-LP-Ventil gehalten wird; das Aktivieren/Öffnen des Niederdruck-LP-Zweigs, der die Luftaufbereitungsstation mit dem LP-Ventil der Klimaanlage verbindet, erfolgt zumindest teilweise gleichzeitig mit dem Aktivieren/Öffnen des Hochdruck-HP-Zweigs, der die Luftaufbereitungsstation mit dem HP-Ventil der Klimaanlage verbindet; das Kühlmittel, das während des Übertragungsschrittes geladen wird, das Ventil (5) zur Expansion der Anlage durchläuft und wird von der Station durch LP als Dampf angesaugt, so dass die Nettomenge, die in die Anlage gelangt, immer positiv ist und mehr geladenes Kühlmittel in Bezug auf das angesaugte Kühlmittel vorhanden ist.

2. Verfahren nach Anspruch 1, wobei das Expansionsventil (5) auf dem LP-Niederdruckzweig einen Druck von 2-3 bar erzeugt.

3. Verfahren nach Anspruch 1, **dadurch gekennzeichnet, dass** die durch LP angesaugte Kühlmittelmenge zurückgewonnen und wieder in den Tank eingebracht wird, was dazu beiträgt, dass der Ladedruck hoch bleibt.

## Revendications

1. Procédé permettant de transférer le liquide de refroidissement provenant d'un réservoir (11) d'une unité/d'un poste de chargement (20) à un système de conditionnement d'air (10), ledit poste de conditionnement d'air (20) comprenant :
a. un réservoir à liquide de refroidissement (11),
b. une soupape de détente (12) pour ouvrir et fermer au moins un conduit (13) pour la sortie du liquide de refroidissement,
c. un raccord à haute pression HP (14), pouvant être relié dans la branche (15) HP à haute pression correspondante au système de conditionnement d'air (10), de sorte à être relié au liquide de refroidissement fluide à haute pression, ou à la fixation/vanne (8) ;
d. un raccord à basse pression BP (16) et pouvant être relié à travers la branche (17) relative au système de conditionnement d'air (10), au moyen d'une fixation/vanne (7) disposée après le détendeur (5) du système de conditionnement d'air (10) ;
e. un groupe d'aspiration (18) qui, à travers des moyens compresseurs, soustrait/extrait le liquide de refroidissement du système de conditionnement d'air (10), à travers la branche à basse pression (17), et le prend dans le réservoir (11), au moyen de conduits (19), de sorte à vider le système ;
procédé **caractérisé en ce que** l'étape consistant à transférer le fluide s'effectue en maintenant aussi la branche (17) du circuit à basse pression ouverte/active, à travers la vanne BP basse pression relative ; l'activation/l'ouverture de la branche BP à basse pression qui relie le poste de conditionnement d'air à la vanne BP du système de conditionnement d'air, se déroule au moins en partie simultanément à l'activation/l'ouverture de la branche HP à haute pression qui relie le poste de conditionnement d'air à la vanne HP du système de conditionnement d'air ; le liquide de refroidissement chargé durant ladite étape de transfert passe à travers le détendeur (5) pour l'expansion du système et est aspiré, comme vapeur, par le poste à travers BP de sorte que la quantité nette qui entre dans le système soit toujours positive et qu'il y ait davantage de liquide de refroidissement chargé par rapport au liquide de refroidissement aspiré.

2. Procédé selon la revendication 1, dans lequel le détendeur (5) génère sur la branche à basse pression BP une pression comprise entre 2 et 3 bars.

3. Procédé selon la revendication 1, **caractérisé en ce que** la quantité de liquide de refroidissement aspiré à travers BP est récupérée et réintroduite dans le réservoir, contribuant à maintenir la pression de chargement élevée.
